# EUROPEAN PATENT SPECIFICATION

(11) **EP 1 154 886 B1**
(45) Date of publication and mention of the grant of the patent: **10.12.2003**
(21) Application number: 00905185.5
(22) Date of filing: 23.02.2000
(51) Int. Cl.: B29C 33/38, B29C 33/04

(54) **MOULDS AND METHOD OF MAKING THE SAME**
GUSSFORMEN UND VERFAHREN ZU DESSEN HERSTELLUNG
MOULES ET PROCEDES DE FABRICATION ASSOCIES

(30) Priority: 25.02.1999 GB 9904205
(43) Date of publication of application: 21.11.2001
(73) Proprietor: British Ceramic Research Limited, Stoke-on-Trent Staffordshire ST4 7LQ (GB)
(72) Inventor: YIASEMIDES, George, Paul, Stoke-on-Trent, Staffordshire ST4 7LQ (GB); MASELKOWSKI, Carlo, Robert, Stoke-on-Trent, Staffordshire ST4 7LQ (GB)
(74) Representative: Swindell & Pearson
(86) International application number: GB0000627
(87) International publication number: WO00050209

(56) References cited:
- EP-A- 0 711 615
- EP-A- 0 742 094
- WO-A-97/16274
- WO-A-99/39889
- DE-A- 19 533 045
- US-A- 3 811 175
- US-A- 4 793 953
- US-A- 5 189 781
- US-A- 5 489 410
- PATENT ABSTRACTS OF JAPAN vol. 016, no. 165 (M-1238), 21 April 1992 (1992-04-21) & JP 04 013489 A (ASAHI CHEM IND CO LTD), 17 January 1992 (1992-01-17)

## Description

This invention concerns improvements in or relation to moulds, and also a method of making moulds.

In a range of net-shape manufacturing processes, it is of critical importance to transfer heat as rapidly as possible to and from the surfaces of a mould, die or core which is in contact with the material which is being formed into a net shape product. Such processes include plastic injection moulding, pressure diecasting, blow moulding and glass forming. In such processes, hot material in a soft or liquid state is injected into a mould forming the shape of the product being manufactured. The mould can be two-part or multi-part, with or without cores.

The material is cooled to a temperature at which it can be handled without damaging the component produced. The mould is then opened and the component ejected. The mould is then closed ready for the next injection cycle. To minimise the cycle time in order to maximise productivity, it is important to cool the injected material as rapidly as possible. Cooling must be spatially uniform to minimise distortion of the component after ejection, as otherwise uneven thermally induced stresses could occur in the component.

When used in this specification the term "mould" is to be understood as denoting a mould, die, or similar tool, which is usable in one or more of the above or similar processes.

EP0711615A discloses a mould with a basic body of a material such as copper with a high thermal conductivity. The mould also has a layer of a material such as steel with a low thermal conductivity but a high resistance to thermal shock and abrasion. The mould is produced by applying the layer to the basic body and forming metallic bonds therebetween by a high pressure metal diffusion process at a temperature of between 850 and 1200°C, and a pressure of between 250 and 2500 bar.

According to the present invention there is provided a method of making a mould, the mould comprising a first part made of steel, the first part forming the mould surface; a second part made of copper or a copper alloy; and a third part of nickel, the third part being interposed between the first and second parts and being in the form of a relatively thin layer, the method comprising locating the first, second and third parts together and subjecting to hot isostatic pressure to form metallic bonds respectively between the nickel and the steel, and the nickel and the copper, the materials of the first, second and third parts remaining in a solid form during the hot isostatic pressing.

A composite blank of the first, second and third materials is preferably produced, and then at least the first material machined to produce a mould, which mould is desirably substantially polished.

The pressing may take place in a sealed container, and preferably at a temperature of 400 to 1350°C, and desirably at a pressure of 400 to 3000 bar. The sealed container is preferably substantially evacuated of fluids prior to pressing.

The third part is preferably applied on to the first or second part by electroplating. Alternatively, the third part may be provided as a foil or applied by electroless plating.

The mould may be heat treated before and/or after machining.

The second part may be formed by machining.

Where the second part is in the form of one or more inserts locatable in one or more cavities in the first part, the second part may be formed by filling the or each cavity in the first part with the second material in powder form, which powder forms the second part during hot isostatic pressing.

Alternatively, the second part may be cast in the or each cavity in the first part.

When a method according to either of the above paragraphs is used, the walls of the or each cavity are preferably initially coated with a layer of the third material, which coating is preferably greater than 25µm thick.

Where the first part is in the form of a substantially constant thickness layer, the underside (non-moulding surface) of the first part may be machined from a block of first material. The second part is desirably subsequently located against the underside of the first part.

The second material may be formed by locating the second material in powder form on the first part with the third part already located thereon, with the powder forming the second part during hot isostatic pressing.

Once the second part has been formed and bonded to the underside of the mould surface of the first part, the first part is preferably formed by machining.

The first part may be formed by hot isostatic pressing of powdered steel. The powder may be located against a former, which former could be produced by rapid prototyping. The first part may be formed as a layer between two formers.

The former may be made of steel, graphite or ceramic. These materials may be machined from solid; sintered from powder; or cast.

The first part may be formed by machining a block of first material to a depth corresponding to the final thickness of the first part below the eventual mould surface; the base part is formed to correspond to the shape of the machined surface of the block of first material, a continuous slot is machined in the surface of the base part, the third part is provided between the first and base parts which are joined by hot isostatic pressing; the first part is subsequently machined to provide the mould surface.

The slots may be lined with pipes, and desirably pipes which during the hot isostatic pressing expand to fill the slots. Alternatively the pipes may be filled with a sacrificial powder such as graphite which is subsequently removed.

According to the present invention there is provided a mould comprising a first part made of steel, the first part forming the mould surface; a second part made of copper or a copper alloy; and a third part of nickel, the third part being interposed between the first and second parts and being in the form of a relatively thin layer, characterised in that the mould is formed by a method comprising locating the first, second and third parts together and subjecting to hot isostatic pressure to form metallic bonds respectively between the nickel and the steel, and the nickel and the copper, the materials of the first, second and third parts remaining in a solid form during the hot isostatic pressing.

The first material preferably comprises steel, preferably a tool, die or mould steel, and may be of the through-hardenable, prehardened, case hardening, corrosion resistant or maraging type. Typical examples would be H13 and AISI 420.

The second material may comprise a copper alloy having a thermal conductivity greater than 60Wm⁻¹deg⁻¹C and preferably greater than 100Wm⁻¹deg⁻¹C.

The second part may be in the form of one or more inserts locatable in one or more recesses in the first part.

The first part preferably provides a required minimum thickness of material for all of the mould surface, and said thickness may be 0.5mm.

The third part may be in the form of a coating on the first or second part or both. The coating is preferably between 2 and 200µm thick, and where the coating is formed by electroplating it is preferably 5 to 50µm thick and desirably substantially 25µm thick.

Holes may be provided extending through at least the first part to permit ejector pins to extend therethrough for rejection of items from the mould, or for core pins or slides.

Passages may be provided extending through the first and/or second parts to permit cooling fluids and/or heating elements to extend therethrough. Desirably each passage only passes through components made of the first or second material and not both. An insert of the first material may be provided in the second part to receive a passage from the first part, or vice versa.

The mould may comprise a number of cooperable parts, with each part being according to the invention.

The first part may be made in two sections, a first section which defines the mould surface, and a second outer section. The second section may be made of a different material or grade of material to the first section.

Insert members may be provided in the second part. The insert members are preferably made of steel. The first part may be in the form of a generally constant thickness layer on the second member, and the layer may be 1 to 8mm thick.

The part of the first part which faces the second part and/or the part of the second part which faces the first part preferably have a relatively large surface area. Formations may be provided on said facing part or parts to increase the surface area, and said formations may comprise any of serrations, grooves or fins. Corresponding interengaging formations are preferably provided on each of the first and second parts.

Channels may be provided in the upper surface of the second part which surface engages against the third part, the channels being such as to enable cooling fluids and/or heating elements to be contained therein.

The channels preferably have a width and depth of between 2 and 10mm.

The channels are preferably lined with pipes. The pipes may be made of nickel. Alternatively the pipes may be made of copper or of stainless steel, and desirably with a nickel coating on the outside thereof.

Embodiments of the present invention will now be described by way of example only and with reference to the accompanying drawings, in which:-
Fig. 1 is a diagrammatic cross-sectional view of a mould according to the invention; and
Figs. 2 to 12 are similar cross-sectional side views of different moulds according to the invention during formation.

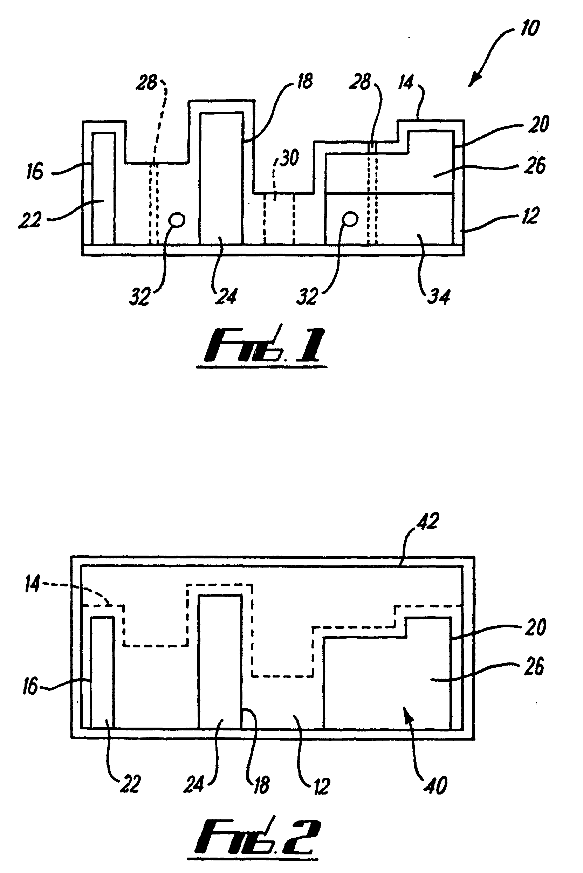

Fig. 1 shows a mould 10 which comprises a block 12 of tool steel. The upper surface 14 of the block 12 has been machined to provide a required contour to define a mould cavity with other such moulds. Three recesses 16,18,20 are provided in the undersurface of the block 12 each extending to the same short spacing from the top thereof. Respective correspondingly shaped inserts 22,24,26 are provided slidingly located respectively in the recesses 16,18,20. The inserts 22,24,26 are electroplated with nickel to provide a coating thereof of substantially 25µm.

The block 12 is formed from a tool steel H13. Alternatives would be a maraging tool steel, P20, AISI 420 or other alternatives. The inserts 22,24,26 are formed of C101 copper alloy but could be formed from copper, or copper chromium or copper zirconium or copper chromium/zirconium alloys, ODS copper alloys, or other high conductivity copper alloys including nickel containing and beryllium containing alloys.

Also provided in the block 12 are two through holes 28 to receive ejector pins, a hole 30 for separate cores, and a looped cooling channel 32. To avoid difficulties of machining dissimilar materials and avoid galvanic corrosion effects, it is desirable that cooling passages do not pass through the different materials of the block 12 and inserts 22,24,26. In view of this a lower part 34 as shown in the drawings of the insert 26 is formed of similar steel to the block 12, and the channel 32 extends therethrough.

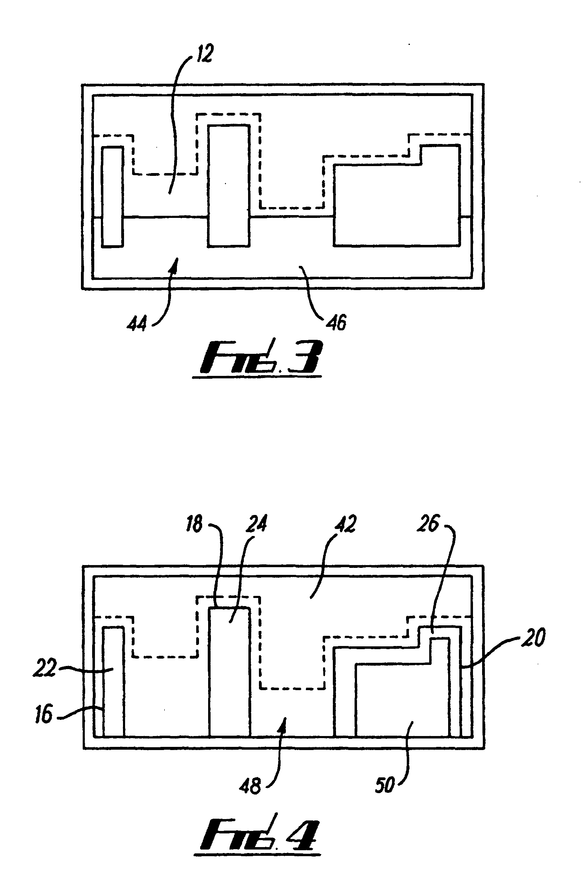

The mould 40 of Fig. 2 is similar to the mould 10 except that the insert 26 is not formed in two parts, and the method and formation will therefore be described together. As indicated above an initial block 12 is taken and machined to provide the recesses 16,18,20. The nickel coated inserts 22,24,26 are located in the recesses and the mould 10 is placed in a steel can 42 and hot isostatically pressed. This causes the nickel to form metal bonds with the inserts 22,24,26 and more particularly with the surrounding surfaces of the block 12 to provide a good bond between the inserts 22,24,26 and the block. Following pressing the surface 14 is machined and polished.

In use, the mould 10 is found to have advantageous performance in that the inserts 22,24,26 of high thermal conductivity allow for quick cooling of moulded items. The nickel interlayer permits different expansion between the copper alloy and the steel, and absorbs stresses therebetween during formation and also use. The nickel layer also provides for good heat transfer therebetween. The moulds 10,40 can be made to be appropriate for any of the above described techniques.

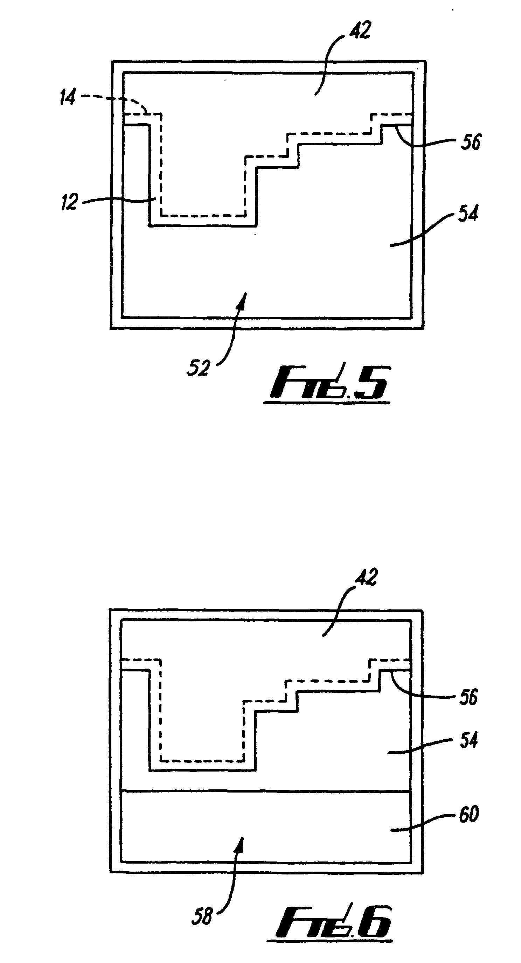

Fig. 3 shows a mould 44 which is generally similar to the moulds 10,40 except that a lower part 46 of the block 12 is made of a lower grade steel and thus cost less.

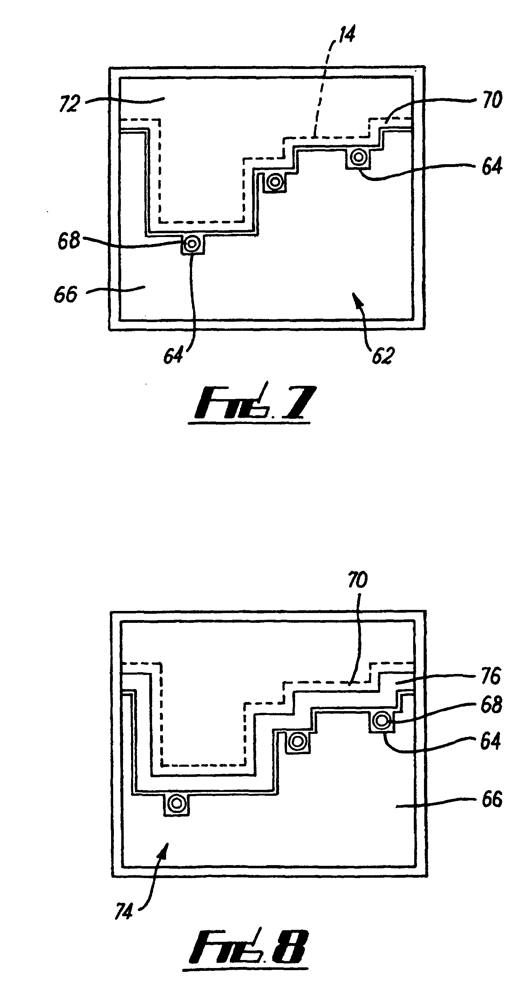

The mould 48 of Fig. 4 is again similar except that a main core 50 of the insert 26 is made of steel which may be tool steel or low carbon or low alloy steel. This reduces thermal expansion mismatch and also cost, whilst providing better mechanical strength than a wholly copper alloy insert.

Rather than preforming the inserts, copper alloy powder could be located in the recesses 16,18,20, which (using suitable canning arrangements) can form the inserts 22,24,26 during hot isostatic pressing. Alternatively, the copper alloy could be cast into the recesses 16,18,20 to form the inserts 22,24,26. In either of these instances the recesses 16,18,20 require initial lining with a layer of nickel, which is preferably more than 25µm thick.

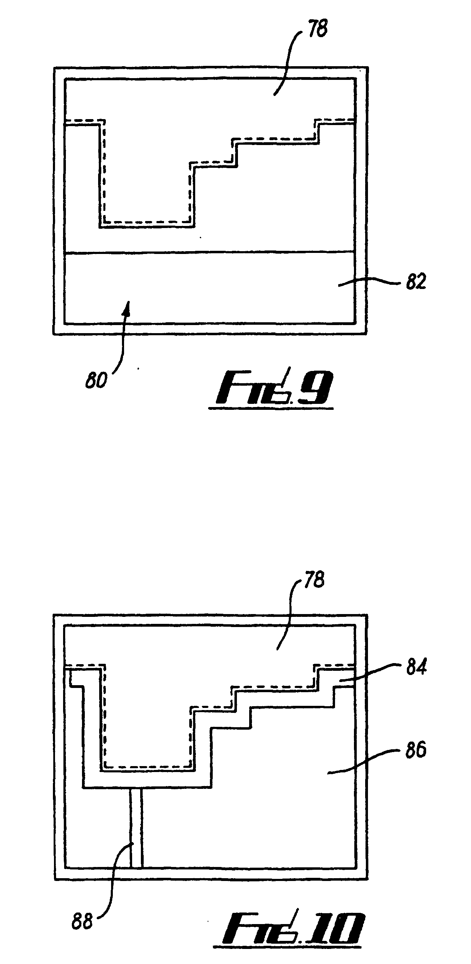

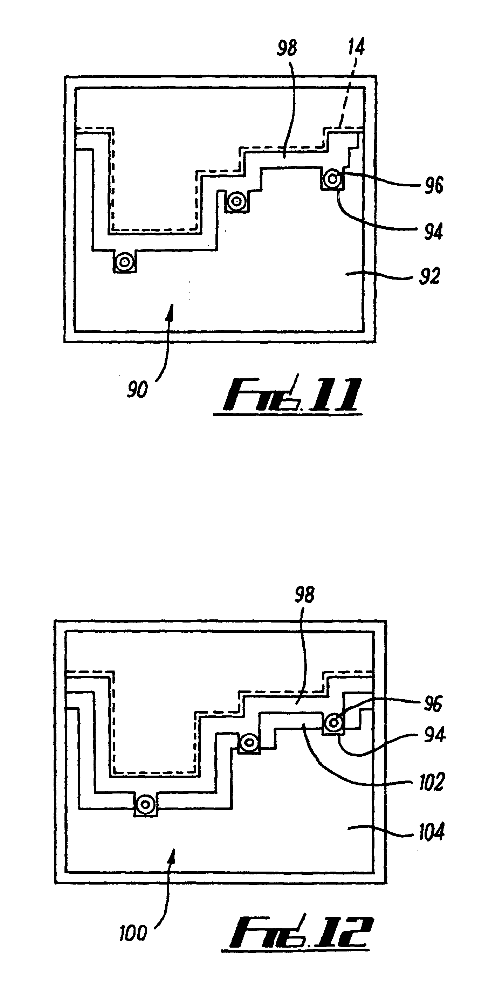

Rather than provide copper alloy inserts a copper alloy could be provided beneath the whole of the moulding surface 14. In Fig. 5 there is shown a mould 52 with a solid block of copper alloy 54 beneath a uniform thickness layer 56 of steel. The mould 52 is formed by correspondingly shaping the steel block 12 and alloy block 54 such that their connection is spaced approximately 5mm below the required moulding surface 14. A layer of nickel is again provided in-between and the two blocks 12,54 are bonded by hot isostatic pressing. The block 12 is subsequently machined and then polished to provide the moulding surface 14. The mould 58 of Fig. 6 is similar except that a lower part 60 of the block 54 is formed of a low cost steel to provide the above outlined advantages. The block 54 could in fact be formed by casting or from powder as outlined above.

Fig. 7 shows a mould 62 in which cooling channels in the form of slots 64 are provided extending in an upper surface of a low alloy steel block 66. The slots 64 are lined with pipes 68 which are formed of nickel or nickel coated copper which during hot isostatic pressing expand to substantially fill the slots 64. A substantially uniform layer 70 of tool steel is provided on top of the block 66 to provide a moulding surface 14. The mould 62 is formed by shaping the block 66 and a block 72 of tool steel which subsequently provides the layer 70, and bonding these together with an intermediate nickel layer by hot isostatic pressing. The majority of the block 72 is then machined away to leave the layer 70. This provides for cooling channels immediately below the moulding surface which considerably increase the rate of heat removal. The channels conform to the shape of the mould cavity and are a uniform depth from the moulding surface, thereby providing consistent cooling. The pipes 68 used are flexible prior to pressing and thus usable with a wide range of shapes of mould. If pipes of a type which may collapse during pressing are used, these can be filled with a sacrificial powder such as graphite powder which can be subsequently oxidised in air.

Fig. 8 shows a similar mould 74 except that a copper alloy uniform thickness layer 76 is provided beneath the mould surface layer 70 and above the block 66. The layer 76 can be formed by any of the above described methods and will be metallurgically bonded to the block 66 and layer 70 by an intermediate nickel layer during hot isostatic pressing.

Rather than machining the steel part of the moulds, this can be formed by hot isostatic pressing of steel powder. Fig. 9 illustrates such an arrangement with a metal former 78 coated with a diffusion barrier to form a mould 80 from powdered steel which is located thereagainst and sandwiched by a solid base member 82 which may be formed of copper alloy, steel or otherwise, with a nickel layer being provided on the top of the base member 82.

Fig. 10 shows a similar arrangement but where a thinner substantially uniform thickness layer 84 of tool steel is formed. In this instance the lower base member 86 has an upper contoured surface to correspond to the underside of the former 78. A filling hole 88 extends through the base member 86 to enable powdered material to be located between the former 78 and member 86.

Fig. 11 shows combinations of the above arrangements with a mould 90 with a base member 92 having slots 94 with pipes 96 therein to provide fluid cooling, and with a layer 98 of tool steel thereon to form a moulding surface 14. The mould 100 of Fig. 12 is similar to the mould 90 except that beneath the layer 98 is provided a layer 102 of copper alloy, and the slots 94 extend through the layer 102. The layer 102 is approximately 5mm thick and may be electro-deposited on to the steel brace member 104. Alternatively, the layer 102 may be formed by machining or casting. Nickel intermediate layers are again provided to ensure good bonding during the hot isostatic pressing.

There are thus described a number of moulds and methods for making moulds which provide considerable advantages over prior arrangements. Various modifications may be made without departing from the scope of the invention. For example it can be advantageous for there to be a higher surface area between the tool steel or similar and the copper alloy or similar. This can be provided by providing cooperating formations such as grooves, fins, serrations or other formations to provide good heat transfer. Other formations or features could be provided than those described above.

Heating elements could be provided in additional channels. It is to be realised that any combination of the above features can be made as conditions dictate. Where a former is used, rather than steel or another metal, graphite or castable ceramic could be used. In the latter case this is particularly advantageous in that the former can readily be formed, and materials can easily be removed therefrom.

## Claims

1. A method of making a mould, the mould (10, 40, 44, 46, 48, 52, 58, 62, 74, 80, 90, 100) comprising a first part (12) made of steel, the first part (12) forming the mould surface (14); a second part (22, 24, 26) made of copper or a copper alloy; and a third part of nickel, the third part being interposed between the first and second parts and being in the form of a relatively thin layer, the method comprising locating the first, second and third parts together and subjecting to hot isostatic pressure to form metallic bonds respectively between the nickel and the steel, and the nickel and the copper, the materials of the first, second and third parts remaining in a solid form during the hot isostatic pressing.

2. A method according to claim 1, **characterised in that** a composite blank of the first, second and third parts is produced, and then at least the material of the first part is machined to produce a mould (40).

3. A method according to claim 2, **characterised in that** the mould (40) is substantially polished.

4. A method according to any of the preceding claims, **characterised in that** the hot isostatic pressing takes place in a sealed container.

5. A method according to claim 4, **characterised in that** the sealed container is substantially evacuated of fluids prior to pressing.

6. A method according to any of the preceding claims, **characterised in that** the hot isostatic pressing takes place at a temperature of 400 to 1350°C.

7. A method according to any of the preceding claims, **characterised in that** the hot isostatic pressing takes place at a pressure of 400 to 3000 bar.

8. A method according to any of the preceding claims, **characterised in that** the third part is applied on to the first (12) or second part (22, 24, 26) by electroplating.

9. A method according to any of claims 1 to 7, **characterised in that** the third part is provided as a foil or applied by electroless plating.

10. A method according to claim 2 and any claim dependent thereon, **characterised in that** the mould is heat treated before and/or after machining.

11. A method according to any of the preceding claims, **characterised in that** the second part may be formed by machining.

12. A method according to any of the preceding claims, **characterised in that** where the second part is in the form of one or more inserts (22, 24, 26) locatable in one or more cavities (16, 18, 20) in the first part (12), the second part is formed by filling the or each cavity (16, 18, 20) in the first part (12) with the second material in powder form, which powder forms the second part (22, 24, 26) during hot isostatic pressing.

13. A method according to any of claims 1 to 11, **characterised in that** where the second part (22, 24, 26) is in the form of one or more sheets locatable in one or more cavities in the first part, the second part (22, 24, 26) is cast in the or each cavity (16, 18, 20) in the first part (12).

14. A method according to claims 12 or 13, **characterised in that** the walls of the or each cavity (16, 18, 20) are initially coated with a layer of the third material.

15. A method according to claim 14, **characterised in that** the coating is greater than 25µm thick.

16. A method according to any of the preceding claims, **characterised in that** where the first part (12) is in the form of a substantially constant thickness layer, the underside (non-moulding surface) of the first part (12) is machined from a block of steel.

17. A method according to claim 16, **characterised in that** the second part (54) is subsequently located against the underside of the first part (12).

18. A method according to claim 17, **characterised in that** the second material is formed by locating the second material in powder form on the first part (12) with the third part already located thereon, with the powder forming the second part (54) during hot isostatic pressing.

19. A method according to claim 18, **characterised in that** once the second part (54) has been formed and bonded to the underside of the mould surface of the first part (12), the first part (12) is formed by machining.

20. A method according to any of the preceding claims, **characterised in that** the first part (12) is formed by hot isostatic pressing of powdered steel.

21. A method according to claim 20, **characterised in that** the powder is located against a former (78).

22. A method according to claim 21, **characterised in that** the former (78) is produced by rapid prototyping.

23. A method according to claims 21 or 22, **characterised in that** the first part (84) is formed as a layer (84) between two formers (78, 82).

24. A method according to any of the preceding claims, **characterised in that** the first part (70, 98) is formed by machining a block of steel to a depth corresponding to the final thickness of the first part (70, 98) below the eventual mould surface; the second part (66, 92) is formed to correspond to the shape of the machined surface of the block of steel, a continuous slot is machined in the surface of the second part (66, 92), the third part is provided between the first (70, 98) and second (66, 92) parts; the first part (70, 98) is subsequently machined to provide the mould surface (14).

25. A method according to claim 24, **characterised in that** the slots (64, 94) are lined with pipes (68, 96).

26. A method according to claim 25, **characterised in that** the slots are lined with pipes (68, 96) which during the hot isostatic pressing expand to fill the slots (64, 94).

27. A method according to claims 25 or 26, **characterised in that** the pipes (68, 96) are filled with a sacrificial powder such as graphite which is subsequently removed.

28. A mould (10, 40, 44, 46, 48, 52, 58, 62, 74, 80, 90, 100) comprising a first part (12) made of steel, the first part (12) forming the mould surface (14); a second part (22, 24, 26) made of copper or a copper alloy; and a third part of nickel, the third part being interposed between the first and second parts and being in the form of a relatively thin layer,**characterised in that** the mould (10, 40, 44, 46, 48, 52, 58, 62, 74, 80, 90, 100) is formed by a method comprising locating the first, second and third parts together and subjecting to hot isostatic pressure to form metallic bonds respectively between the nickel and the steel, and the nickel and the copper, the materials of the first, second and third parts remaining in a solid form during the hot isostatic pressing.

29. A mould according to claim 28, **characterised in that** the steel is a tool, die or mould steel.

30. A mould according to claim 29, **characterised in that** the steel is of the through-hardenable, prehardened, case hardening, corrosion resistant or maraging type of steel.

31. A mould according to claim 30, **characterised in that** the first material comprises H13 or AISI 420.

32. A mould according to any of claims 28 to 31, **characterised in that** the second part is made of a material comprising a copper alloy having a thermal conductivity greater than 60Wm⁻¹deg⁻¹C.

33. A mould according to Claim 32, **characterised in that** the thermal conductivity is greater than 100Wm⁻¹deg⁻¹C.

34. A mould according to any of claims 28 to 33, **characterised in that** the second part is in the form of one or more inserts (22, 24, 26) locatable in one or more recesses (16, 18, 20) in the first part (12).

35. A mould according to any of claims 28 to 34, **characterised in that** the first part (12) provides a required minimum thickness of material for all of the mould surface (14).

36. A mould according to claim 35, **characterised in that** the required minimum thickness is 0.5mm.

37. A mould according to any of claims 28 to 36, **characterised in that** the third part is in the form of a coating on the first or second part or both.

38. A mould according to claim 37, **characterised in that** the coating is between 2 and 200µm thick.

39. A mould according to claim 38, **characterised in that** the coating is formed by electroplating and is 5 to 50µ m thick.

40. A mould according to claim 39, **characterised in that** the coating is substantially 25µm thick.

41. A mould according to any of claims 28 to 40, **characterised in that** holes (28) are provided extending through at least the first part to permit ejector pins to extend therethrough for rejection of items from the mould (10), or for core pins or slides.

42. A mould according to any of claims 28 to 41, **characterised in that** passages (32) are provided extending through the first (12) and/or second (22, 24, 26) parts to permit cooling fluids and/or heating elements to extend therethrough.

43. A mould according to claim 42, **characterised in that** each passage (32) only passes through components made of steel, or of copper or a copper alloy, and not both.

44. A mould according to claims 42 or 43, **characterised in that** an insert (34) of the material of the first part is provided in the second part (26) to receive a passage (32) from the first part (12), or vice versa.

45. A mould according to any of claims 28 to 44, **characterised in that** the mould comprises a number of cooperable parts, with each cooperable part being according to the invention.

46. A mould according to any of claims 28 to 45, **characterised in that** the first part (12) is made in two sections, a first section (12) which defines the mould surface (14), and a second outer section (46).

47. A mould according to claim 46, **characterised in that** the second section (46) is made of a different material or grade of material to the first section (12).

48. A mould according to any of claims 45 to 47, **characterised in that** insert members (50) are provided in the second part (26).

49. A mould according to claim 48, **characterised in that** the insert members (50) are made of steel.

50. A mould according to any of claims 28 to 49, **characterised in that** the first part (12) is in the form of a generally constant thickness layer (56) on a second member (54).

51. A mould according to claim 50, **characterised in that** the layer (56) is 1 to 8mm thick.

52. A mould according to any of claims 28 to 51, **characterised in that** the part of the first part (12) which faces the second part and/or the part of the second part which faces the first part (12) have a relatively large surface area.

53. A mould according to claim 52, **characterised in that** formations are provided on said facing part or parts to increase the surface area.

54. A mould according to claim 53, **characterised in that** said formations comprise any of serrations, grooves or fins.

55. A mould according to claims 53 or 54, **characterised in that** corresponding interengaging formations are provided on each of the first and second parts.

56. A mould according to any of claims 28 to 55, **characterised in that** channels (64, 94) are provided in the upper surface of the second part (66, 92) which surface engages against the third part, the channels (64, 94) being such as to enable cooling fluids and/or heating elements to be contained therein.

57. A mould according to claim 56, **characterised in that** the channels (64, 94) have a width and depth of between 2 and 10mm.

58. A mould according to claims 56 or 57, **characterised in that** the channels (64, 94) are lined with pipes (68, 96).

59. A mould according to claim 58, **characterised in that** the pipes (68, 96) are made of nickel.

60. A mould according to claim 58, **characterised in that** the pipes (68, 96) are made of copper or of stainless steel.

61. A mould according to claim 60, **characterised in that** the pipes (68, 96) are provided with a nickel coating on the outside thereof.

## Patentansprüche

1. Verfahren zum Herstellen einer Giessform, wobei die Giessform (10, 40, 44, 46, 48, 52, 58, 62, 74, 80, 90, 100) aufweist: einen ersten Teil (12) aus Stahl, wobei der erste Teil (12) die Giessform-Oberfläche (14) bildet; einen zweiten Teil (22, 24, 26) aus Kupfer oder einer Kupferlegierung; und einen dritten Teil aus Nickel, wobei der dritte Teil zwischen dem ersten und dem zweiten Teil eingebettet ist und in Form einer relativ dünnen Schicht vorliegt, wobei dem Verfahren der erste, der zweite und der dritte Teil zusammengebracht werden und einem heissen isostatischen Druck ausgesetzt werden, um metallische Verbindungen zwischem dem Nickel und dem Stahl bzw. dem Nickel und dem Kupfer zu bilden, wobei die Materialien des ersten, des zweiten und des dritten Teils während des heissen isostatischen Pressens in einer festen Form bleiben.

2. Verfahren nach Anspruch 1, **dadurch gekennzeichnet, dass** eine Verbund-Rohform auf dem ersten, dem zweiten und dem dritten Teil erzeugt wird, woraufhin zumindest das Material des ersten Teils maschinell bearbeitet wird, um eine Giessform (40) herzustellen.

3. Verfahren nach Anspruch 2, **dadurch gekennzeichnet, dass** die Giessform (40) im wesentlichen poliert wird.

4. Verfahren nach einem der vorhergehenden Ansprüche, **dadurch gekennzeichnet, dass** das heisse isostatische Pressen in einem abgedichteten Behälter stattfindet.

5. Verfahren nach Anspruch 4, **dadurch gekennzeichnet, dass** aus dem abgedichteten Behälter im wesentlichen Fluide vor dem Pressen entfernt werden.

6. Verfahren nach einem der vorhergehenden Ansprüche, **dadurch gekennzeichnet, dass** das heisse isostatische Pressen bei einer Temperatur von 400 bis 1.350°C stattfindet.

7. Verfahren nach einem der vorhergehenden Ansprüche, **dadurch gekennzeichnet, dass** das heisse isostatische Pressen bei einer einem Druck von 400 bis 3.000 bar stattfindet.

8. Verfahren nach einem der vorhergehenden Ansprüche, **dadurch gekennzeichnet, dass** der dritte Teil auf den ersten Teil (12) oder den zweiten Teil (22, 24, 26) durch galvanische Oberflächenbehandlung bzw. Elektroplattieren aufgetragen wird.

9. Verfahren nach einem der Ansprüche 1 bis 7, **dadurch gekennzeichnet, dass** der dritte Teil als Folie bereitgestellt wird oder durch stromlose Abscheidung aufgetragen wird.

10. Verfahren nach Anspruch 2 und jedem davon abhängigen Anspruch, **dadurch gekennzeichnet, dass** die Giessform vor und/oder nach der maschinellen Bearbeitung wärmebehandelt wird.

11. Verfahren nach einem der vorhergehenden Ansprüche, **dadurch gekennzeichnet, dass** der zweite Teil durch maschinelle Bearbeitung hergestellt werden kann.

12. Verfahren nach einem der vorhergehenden Ansprüche, **dadurch gekennzeichnet, dass** dort, wo der zweite Teil in Form eines oder mehrerer Einsätze (22, 24, 26) vorliegt, die in einem oder mehreren Hohlräumen (16, 18, 20) in dem ersten Teil (12) angeordnet werden können, der zweite Teil gebildet wird, indem man den oder jeden Hohlraum (16, 18, 20) in dem ersten Teil (12) mit dem zweiten Material in Pulverform füllt, wobei das Pulver während des heissen isostatischen Pressens den zweiten Teil (22, 24, 26) bildet.

13. Verfahren nach einem der Ansprüche 1 bis 11, **dadurch gekennzeichnet, dass** dort, wo der zweite Teil (22, 24, 26) in Form einer oder mehrerer Folien bzw. Lagen vorliegt, die in einer oder mehreren Hohlräumen in dem ersten Teil angeordnet werden können, der zweite Teil (22, 24, 26) in dem oder jedem Hohlraum (16, 18, 20) in dem ersten Teil (12) gegossen wird.

14. Verfahren nach Anspruch 12 oder 13, **dadurch gekennzeichnet, dass** die Wände des oder jedes Hohlraums (16, 18, 20) anfänglich mit einer Schicht aus dem dritten Material überzogen werden.

15. Verfahren nach Anspruch 14, **dadurch gekennzeichnet, dass** der Überzug eine Dicke von mehr als 25µm hat.

16. Verfahren nach einem der vorhergehenden Ansprüche, **dadurch gekennzeichnet, dass** dort, wo der erste Teil (12) in Form einer Schicht mit im wesentlichen konstanter Dicke vorliegt, die Unterseite (von der Giessform abgewandte Fläche) des ersten Teils (12) aus einem Stahlblock durch maschinelle Bearbeitung gefertigt wird.

17. Verfahren nach Anspruch 16, **dadurch gekennzeichnet, dass** der zweite Teil (54) im wesentlichen an der Unterseite des ersten Teils (12) angebracht wird.

18. Verfahren nach Anspruch 17, **dadurch gekennzeichnet, dass** das zweite Material gebildet wird, indem man das zweite Material in Pulverform auf dem ersten Teil (12) anordnet, wobei der dritte Teil schon darauf angeordnet ist und wobei das Pulver während des heissen isostatischen Pressens den zweiten Teil (54) bildet.

19. Verfahren nach Anspruch 18, **dadurch gekennzeichnet, dass**, sobald der zweite Teil (54) gebildet worden ist und mit der Unterseite der Giessform-Fläche des ersten Teils (12) verbunden worden ist, der erste Teil (12) durch maschinelle Bearbeitung gebildet wird.

20. Verfahren nach einem der vorhergehenden Ansprüche, **dadurch gekennzeichnet, dass** der erste Teil (12) durch heisses isostatisches Pressen von pulverförmigem Stahl gebildet wird.

21. Verfahren nach Anspruch 20, **dadurch gekennzeichnet, dass** das Pulver an einer Formvorrichtung (78) angeordnet wird.

22. Verfahren nach Anspruch 21, **dadurch gekennzeichnet, dass** die Formvorrichtung (78) durch rasche Prototypenherstellung (rapid prototyping) hergestellt wird.

23. Verfahren nach Anspruch 21 oder 22, **dadurch gekennzeichnet, dass** der erste Teil (84) als Schicht (84) zwischen zwei Formvorrichtungen (78, 82) ausgebildet wird.

24. Verfahren nach einem der vorhergehenden Ansprüche, **dadurch gekennzeichnet, dass** der erste Teil hergestellt wird, indem man einen Stahlblock bis zu einer Tiefe maschinell bearbeitet, welche der endgültigen Dicke des ersten Teils (70, 98) unterhalb dieser letztendlichen Giessform-Fläche entspricht; der zweite Teil (66, 92) so gebildet wird, dass er der Gestalt der maschinell bearbeiteten Oberfläche des Stahlblocks entspricht, wobei ein durchgehender Schlitz in die Oberfläche des zweiten Teils (66, 92) maschinell eingearbeitet wird und wobei der dritte Teil zwischen dem ersten Teil (70, 98) und dem zweiten Teil (66, 92) bereitgestellt wird; und der dritte Teil (70, 98) anschliessend maschinell bearbeitet wird, um die Giessform-Fläche (14) zu erzeugen.

25. Verfahren nach Anspruch 24, **dadurch gekennzeichnet, dass** die Schlitze (64, 94) mit Rohren (68, 96) ausgekleidet sind.

26. Verfahren nach Anspruch 25, **dadurch gekennzeichnet, dass** die Schlitze mit Rohren (68, 96) ausgekleidet sind, die sich während des heissen isostatischen Pressens ausdehnen, um die Schlitze (64, 94) auszufüllen.

27. Verfahren nach Anspruch 25 oder 26, **dadurch gekennzeichnet, dass** die Rohre (68, 96) mit einem Opferpulver, wie z.B. Graphit, gefüllt werden, das anschliessend entfernt wird.

28. Giessform (10, 40, 44, 46, 48, 52, 58, 62, 74, 80, 90, 100), welche aufweist: einen ersten Teil (12) aus Stahl, wobei der erste Teil (12) die Giessform-Oberfläche (14) bildet; einen zweiten Teil (22, 24, 26) aus Kupfer oder einer Kupferlegierung; und einen dritten Teil aus Nickel, wobei der dritte Teil zwischen dem ersten Teil und dem zweiten Teil eingebettet ist und in Form einer relativ dünnen Schicht vorliegt, **dadurch gekennzeichnet, dass** die Giessform (10, 40, 44, 46, 48, 52, 58, 62, 74, 80, 90, 100) mittels eines Verfahrens hergestellt wird, bei dem der erste, der zweite und der dritte Teil zusammengebracht werden und einem heissen isostatischen Druck ausgesetzt werden, um Metallverbindungen zwischen dem Nickel und dem Stahl bzw. dem Nickel und dem Kupfer zu bilden, wobei die Materialien des ersten Teils, des zweiten Teils und des dritten Teils während des heissen isostatischen Pressens in einer festen Form verbleiben.

29. Giessform nach Anspruch 28, **dadurch gekennzeichnet, dass** der Stahl ein Werkzeugstahl, ein Matrizenstahl oder ein Formstahl ist.

30. Giessform nach Anspruch 28, **dadurch gekennzeichnet, dass** der Stahl ein durchhärtbarer, ein vorgehärteter, ein einsatzhärtbarer, ein korrosionsbeständiger oder ein martensitaushärtender Stahl ist.

31. Giessform nach Anspruch 30, **dadurch gekennzeichnet, dass** das erste Material H13 oder AISI420 aufweist.

32. Giessform nach einem der Ansprüche 28 bis 31, **dadurch gekennzeichnet, dass** der zweite Teil aus einem Material besteht, welches eine Kupferlegierung aufweist, eine thermische Leitfähigkeit von mehr als 60Wm⁻¹grad⁻¹ aufweist.

33. Giessform nach Anspruch 32, **dadurch gekennzeichnet, dass** die thermische Leitfähigkeit grösser als 100Wm⁻¹grad⁻¹ ist.

34. Giessform nach einem der Ansprüche 28 bis 33, **dadurch gekennzeichnet, dass** der zweite Teil in Form eines oder mehrerer Einsätze (22, 24, 26) vorliegt, die in einer oder mehreren Vertiefungen (16, 18, 20) in dem ersten Teil (12) angeordnet werden können.

35. Giessform nach einem der Ansprüche 28 bis 34, **dadurch gekennzeichnet, dass** der erste Teil (12) eine erforderliche minimale Materialdicke für die gesamte Giessform-Oberfläche (14) bildet.

36. Giessform nach Anspruch 35, **dadurch gekennzeichnet, dass** die erforderliche minimale Dicke 0,5mm ist.

37. Giessform nach einem der Ansprüche 28 bis 36, **dadurch gekennzeichnet, dass** der dritte Teil in Form einer Beschichtung auf dem ersten oder dem zweiten Teil oder auf beiden vorliegt.

38. Giessform nach Anspruch 37, **dadurch gekennzeichnet, dass** die Beschichtung zwischen 2 und 200µm dick ist.

39. Giessform nach Anspruch 38, **dadurch gekennzeichnet, dass** die Beschichtung durch Elektroplattieren bzw. galvanisches Abscheiden gebildet wird und 5 bis 50µm dick ist.

40. Giessform nach Anspruch 39, **dadurch gekennzeichnet, dass** die Beschichtung im wesentlichen 25µm dick ist.

41. Giessform nach einem der Ansprüche 28 bis 40, **dadurch gekennzeichnet, dass** Löcher (28) vorgesehen sind, die sich durch mindestens den ersten Teil hindurch erstrecken, um zu ermöglichen, dass sich Auswerferstifte durch sie hindurch erstrecken zum Ausstossen von Gegenständen aus der Giessform (10), oder für Kernstifte oder Schieber.

42. Giessform nach einem der Ansprüche 28 bis 41, **dadurch gekennzeichnet, dass** Durchtritte (32) vorgesehen sind, die sich durch den ersten Teil (12) und/oder den zweiten Teil (22, 24, 26) hindurch erstrecken, um zu ermöglichen, dass sich die Fluide und/oder Heizelemente durch sie hindurch erstrecken.

43. Giessform nach Anspruch 42, **dadurch gekennzeichnet, dass** jeder Durchtritt (32) nur durch Komponenten aus Stahl oder aus Kupfer oder einer Kupferlegierung, nicht jedoch durch beide hindurchtritt.

44. Giessform nach Anspruch 42 oder 43, **dadurch gekennzeichnet, dass** ein Einsatz (34) aus dem Material des ersten Teils in dem zweiten Teil (26) vorgesehen ist, um einen Durchtritt (32) von dem ersten Teil (12) aufzunehmen, oder umgekehrt.

45. Giessform nach einem der Ansprüche 28 bis 44, **dadurch gekennzeichnet, dass** die Giessform eine Anzahl zusammenwirkender Teile aufweist, wobei jeder zusammenwirkende Teil ein erfindungsgemässer Teil ist.

46. Giessform nach einem der Ansprüche 28 bis 45, **dadurch gekennzeichnet, dass** der erste Teil (12) aus zwei Abschnitten besteht, nämlich einem ersten Abschnitt (12), der die Giessform-Oberfläche (14) bestimmt, und einem zweiten äusseren Abschnitt (46).

47. Giessform nach Anspruch 46, **dadurch gekennzeichnet, dass** der zweite Abschnitt (46) aus einem anderen Material oder einem Material anderer Beschaffenheit als der erste Abschnitt (12) besteht.

48. Giessform nach einem der Ansprüche 45 bis 47, **dadurch gekennzeichnet, dass** Einsatzgleider (50) in dem zweiten Teil (26) vorgesehen sind.

49. Giessform nach Anspruch 48, **dadurch gekennzeichnet, dass** die Einsatzglieder (50) aus Stahl bestehen.

50. Giessform nach einem der Ansprüche 28 bis 49, **dadurch gekennzeichnet, dass** der erste Teil (12) in Form einer Schicht (46) mit allgemein konstanter Dicke auf einem zweiten Glied (54) vorliegt.

51. Giessform nach Anspruch 50, **dadurch gekennzeichnet, dass** die Schicht (46) 1 bis 8mm dick ist.

52. Giessform nach einem der Ansprüche 28 bis 51, **dadurch gekennzeichnet, dass** der Abschnitt des ersten Teils (12), der dem zweiten Teil zugewandt ist, und/oder der Abschnitt des zweiten Teils, der dem ersten Teil (12) zugewandt ist, eine relativ grosse Oberfläche hat bzw. haben.

53. Giessform nach Anspruch 52, **dadurch gekennzeichnet, dass** Formationen auf dem zugewandten Teil oder den zugewandten Teilen vorgesehen sind, um die Oberfläche zu vergrössern.

54. Giessform nach Anspruch 53, **dadurch gekennzeichnet, dass** die Formationen Sägezähne, Rillen oder Rippen aufweisen.

55. Giessform nach Anspruch 53 oder 54, **dadurch gekennzeichnet, dass** entsprechende ineinander eingreifende Formationen auf dem ersten Teil und dem zweiten Teil vorgesehen sind.

56. Giessform nach einem der Ansprüche 28 bis 55, **dadurch gekennzeichnet, dass** Kanäle (64, 94) in der oberen Fläche des zweiten Teils (66, 92) vorgesehen sind, wobei die Fläche mit dem dritten Teil in Eingriff ist und die Kanäle (64, 94) so ausgelegt sind, dass sie Kühlfluide und/oder Heizelemente in ihnen enthalten können.

57. Giessform nach Anspruch 46, **dadurch gekennzeichnet, dass** die Kanäle (64, 94) eine Breite und eine Tiefe zwischen 2 und 10mm haben.

58. Giessform nach Anspruch 56 oder 57, **dadurch gekennzeichnet, dass** die Kanäle (64, 94) mit Rohren (68, 96) ausgekleidet sind.

59. Giessform nach Anspruch 58, **dadurch gekennzeichnet, dass** die Rohre (68, 96) aus Nickel bestehen.

60. Giessform nach Anspruch 58, **dadurch gekennzeichnet, dass** die Rohre (68, 96) aus Kupfer oder rostfreiem Stahl bestehen.

61. Giessform nach Anspruch 60, **dadurch gekennzeichnet, dass** die Rohre (68, 96) an ihren Aussenseite mit einer Nikkel-Beschichtung ausgestattet sind.

## Revendications

1. Procédé de fabrication d'un moule, le moule (10, 40, 44, 46, 48 , 52, 58, 62, 74, 80, 90, 100) comportant une première partie (12) fabriquée en acier, la première partie (12) formant la surface de moule (14), une deuxième partie (22, 24, 26) fabriquée en cuivre ou en un alliage de cuivre, et une troisième partie en nickel, la troisième partie étant interposée entre les première et deuxième parties et ayant la forme d'une couche relativement mince, le procédé comportant l'étape consistant à positionner les première, deuxième et troisième partie ensemble et à les soumettre à une pression isostatique à chaud pour former des liaisons métalliques respectivement entre le nickel et l'acier, et entre le nickel et le cuivre, les matériaux des première, deuxième et troisième parties restant sous une forme solide pendant la mise sous pression isostatique à chaud.

2. Procédé selon la revendication 1, **caractérisé en ce qu'**une ébauche composite des première, deuxième et troisième parties est produite, et ensuite au moins le matériau de la première partie est usiné pour produire un moule (40).

3. Procédé selon la revendication 2, **caractérisé en ce que** le moule (40) est sensiblement poli.

4. Procédé selon l'une quelconque des revendications précédentes, **caractérisé en ce que** la mise sous pression isostatique à chaud a lieu dans un conteneur rendu étanche.

5. Procédé selon la revendication 4, **caractérisé en ce que** le conteneur rendu étanche est sensiblement évacué de fluides avant mise sous pression.

6. Procédé selon l'une quelconque des revendications précédentes, **caractérisé en ce que** la mise sous pression isostatique à chaud a lieu à une température de 400 à 1 350°C.

7. Procédé selon l'une quelconque des revendications précédentes, **caractérisé en ce que** la mise sous pression isostatique à chaud a lieu à une pression de 400 à 3 000 bar.

8. Procédé selon l'une quelconque des revendications précédentes, **caractérisé en ce que** la troisième partie est appliquée sur la première partie (12) ou sur la deuxième partie (22, 24, 26) par électro-plaquage.

9. Procédé selon l'une quelconque des revendications 1 à 7, **caractérisé en ce que** la troisième partie est fournie sous la forme d'une feuille, ou est appliquée par plaquage sans courant.

10. Procédé selon la revendication 2 et selon l'une quelconque des revendications dépendantes de celle-ci, **caractérisé en ce que** le moule est traité à chaud avant/ou après usinage.

11. Procédé selon l'une quelconque des revendications précédentes, **caractérisé en ce que** la deuxième partie peut être formée par usinage.

12. Procédé selon l'une quelconque des revendications précédentes, **caractérisé en ce que** là où la deuxième partie a la forme d'une ou de plusieurs pièces rapportées (22, 24, 26) pouvant être positionnées dans une ou plusieurs cavités (16, 18, 20) dans la première partie (12), la deuxième partie est formée par remplissage de la cavité ou de chaque cavité (16, 18, 20) de la première partie (12) à l'aide du deuxième matériau en forme de poudre, laquelle poudre forme la deuxième partie (22, 24, 26) pendant la mise sous pression isostatique à chaud.

13. Procédé selon l'une quelconque des revendications 1 à 11, **caractérisé en ce que** là où la deuxième partie (22, 24, 26) a la forme d'une ou de plusieurs feuilles pouvant être positionnées dans une ou plusieurs cavités de la première partie, la deuxième partie (22, 24, 26) est coulée dans la cavité ou chaque cavité (16, 18, 20) de la première partie (12).

14. Procédé selon la revendication 12 ou 13, **caractérisé en ce que** les parois de la cavité ou de chaque cavité (16, 18, 20) sont revêtues initialement d'une couche du troisième matériau.

15. Procédé selon la revendication 14, **caractérisé en ce que** le revêtement est d'une épaisseur supérieure à 25 µm.

16. Procédé selon l'une quelconque des revendications précédentes, **caractérisé en ce que** là où la première partie (12) a la forme d'une couche ayant une épaisseur sensiblement constante, le côté inférieur (surface de non-moulage) de la première partie (12) est usiné à partir d'un bloc d'acier.

17. Procédé selon la revendication 16, **caractérisé en ce que** la deuxième partie (54) est positionnée ensuite contre le côté inférieur de la première partie (12).

18. Procédé selon la revendication 17, **caractérisé en ce que** le deuxième matériau est formé en positionnant le deuxième matériau sous forme de poudre sur la première partie (12), la troisième partie étant déjà positionnée sur celle-ci, la poudre formant la deuxième partie (54) pendant la mise sous pression isostatique à chaud.

19. Procédé selon la revendication 18, **caractérisée en ce qu'**une fois que la deuxième partie (54) a été formée et fixée sur le côté inférieur de la surface de moule de la première partie (12), la première partie (12) est formée par usinage.

20. Procédé selon l'une quelconque des revendications précédentes, **caractérisé en ce que** la première partie (12) est formée par mise sous pression isostatique à chaud d'acier en poudre.

21. Procédé selon la revendication 20, **caractérisé en ce que** la poudre est positionnée contre un gabarit (78).

22. Procédé selon la revendication 21, **caractérisé en ce que** le gabarit (78) est formé par un prototypage rapide.

23. Procédé selon la revendication 21 ou 22, **caractérisé en ce que** la première partie (84) est formée sous la forme d'une couche (84) entre deux gabarits (78, 82).

24. Procédé selon l'une quelconque des revendications précédentes, **caractérisé en ce que** la première partie (70, 98) est formée en usinant un bloc d'acier à une profondeur correspondant à l'épaisseur finale de la première partie (70, 98) en dessous de la surface de moule éventuelle, la deuxième partie (66, 92) est formée pour correspondre.à la forme de la surface usinée du bloc d'acier, une fente continue est usinée dans la surface de la deuxième partie (66, 92), la troisième partie est fournie entre les première (70, 98) et deuxième (66, 92) parties, la première partie (70, 98) est usinée ensuite pour fournir la surface de moule (14).

25. Procédé selon la revendication 24, **caractérisé en ce que** les fentes (74, 84) sont revêtues intérieurement de tuyaux (68, 96).

26. Procédé selon la revendication 25, **caractérisé en ce que** les fentes sont revêtues intérieurement de tuyaux (68, 96) qui, pendant la mise sous pression isostatique à chaud, se dilatent pour remplir les fentes (64, 94).

27. Procédé selon la revendication 25 ou 26, **caractérisé en ce que** les tuyaux (68, 96) sont remplis d'une poudre sacrificielle telle que du graphite, qui est ensuite enlevée.

28. Moule (10, 40, 44, 46, 48, 52, 58, 62, 74, 80, 90, 100) comportant une première partie (12) fabriquée en acier, la première partie (12) formant la surface de moule (14), une deuxième partie (22, 24, 26) fabriquée en cuivre ou en un alliage de cuivre, et une troisième partie en nickel, la troisième partie étant interposée entre les première et deuxième parties, et ayant la forme d'une couche relativement mince, **caractérisé en ce que** le moule (10, 40, 44, 46, 48, 52, 58, 62, 74, 80, 90, 100) est formé par l'intermédiaire d'un procédé comportant l'étape consistant à positionner les première, deuxième et troisième parties ensemble, et à les soumettre à une pression isostatique à chaud pour former des liaisons métalliques respectivement entre le nickel et l'acier, et le nickel et le cuivre, les matériaux des première, deuxième et troisième parties restant sous une forme solide pendant la mise sous pression isostatique à chaud.

29. Moule selon la revendication 28, **caractérisé en ce que** l'acier est un acier d'outil, de matrice ou de moule.

30. Moule selon la revendication 29, **caractérisé en ce que** l'acier est du type pouvant être durci à coeur, pré-durci, durcissant, résistant à la corrosion ou acier maraging.

31. Moule selon la revendication 30, **caractérisé en ce que** le premier matériau comporte H13 ou AISI 420.

32. Moule selon l'une quelconque des revendications 28 à 31, **caractérisé en ce que** la deuxième partie est constituée d'un matériau comportant un alliage de cuivre ayant une conductivité thermique supérieure à 60Wm⁻¹deg⁻¹C.

33. Moule selon la revendication 32, **caractérisé en ce que** la conductivité thermique est supérieure à 100Wm⁻¹deg⁻¹C.

34. Moule selon l'une quelconque des revendications 28 à 33, **caractérisé en ce que** la deuxième partie a la forme d'une ou de plusieurs pièces rapportées (22, 24, 26) pouvant être positionnées dans un ou plusieurs évidements (16, 18, 20) situés dans la première partie (12).

35. Moule selon l'une quelconque des revendications 28 à 34, **caractérisé en ce que** la première partie (12) fournit une épaisseur minimum nécessaire de matériau pour toute la surface de moule (14).

36. Moule selon la revendication 35, **caractérisé en ce que** l'épaisseur minimum nécessaire est de 0,5 mm.

37. Moule selon l'une quelconque des revendications 28 à 36, **caractérisé en ce que** la troisième partie a la forme d'un revêtement situé sur la première ou sur la deuxième partie, ou sur les deux.

38. Moule selon la revendication 37, **caractérisé en ce que** le revêtement a une épaisseur comprise entre 2 et 200 µm.

39. Moule selon la revendication 38, **caractérisé en ce que** le revêtement est formé par électro-plaquage et a une épaisseur de 5 à 50 µm.

40. Moule selon la revendication 39, **caractérisé en ce que** le revêtement a une épaisseur de sensiblement 25 µm.

41. Moule selon l'une quelconque des revendications 28 à 40, **caractérisé en ce que** des trous (28) sont fournis, s'étendant à travers au moins la première partie, pour permettre à des broches d'éjection de s'étendre à travers ceux-ci pour rejeter des articles à partir du moule (10), ou pour des broches de noyau ou des coulisseaux.

42. Moule selon l'une quelconque des revendications 28 à 41, **caractérisé en ce que** des passages (32) sont fournis, s'étendant à travers la première partie (12) et/ou la deuxième partie (22, 24, 26), pour permettre à des fluides de refroidissement et/ou à des éléments chauffants de s'étendre à travers ceux-ci.

43. Moule selon la revendication 42, **caractérisé en ce que** chaque passage (32) passe uniquement à travers des composants fabriqués en acier, en cuivre ou en alliage de cuivre, et pas à travers les deux.

44. Moule selon la revendication 42 ou 43, **caractérisé en ce qu'**une pièce rapportée (34) du matériau de la première partie est agencée dans la deuxième partie (26) pour recevoir un passage (32) à partir de la première partie (12), ou vice versa.

45. Moule selon l'une quelconque des revendications 28 à 44, **caractérisé en ce que** le moule comporte plusieurs parties aptes à coopérer, chaque partie apte à coopérer étant conforme à la présente invention.

46. Moule selon l'une quelconque des revendications 28 à 45, **caractérisé en ce que** la première partie (12) est réalisée en deux tronçons, un premier tronçon (12), qui définit la surface de moule (14), et un second tronçon extérieur (46).

47. Moule selon la revendication 46, **caractérisé en ce que** le second tronçon (16) est réalisé en un matériau différent ou en une qualité de matériau différente du premier tronçon (12).

48. Moule selon l'une quelconque des revendications 45 à 47, **caractérisé en ce que** des éléments de pièce rapportée (50) sont agencés dans la deuxième partie (26).

49. Moule selon la revendication 48, **caractérisé en ce que** les éléments de pièce rapportée (50) sont fabriqués en acier.

50. Moule selon l'une quelconque des revendications 28 à 49, **caractérisé en ce que** la première partie (12) a la forme d'une couche (56) a une épaisseur généralement constante sur un deuxième élément (54).

51. Moule selon la revendication 50, **caractérisé en ce que** la couche (56) est d'une épaisseur de 1 à 8 mm.

52. Moule selon l'une quelconque des revendications 28 à 51, **caractérisé en ce que** la partie de la première partie (12) qui est en vis-à-vis de la deuxième partie et/ou la partie de la deuxième partie qui est en vis-à-vis de la première partie (12) a une surface superficielle relativement importante.

53. Moule selon la revendication 52, **caractérisé en ce que** des formations sont fournies sur ladite ou lesdites parties en vis-à-vis, pour augmenter la surface superficielle.

54. Moule selon la revendication 53, **caractérisé en ce que** lesdites formations comportent des éléments quelconques parmi des empreintes, des gorges ou des ailettes.

55. Moule selon la revendication 53 ou 54, **caractérisé en ce que** des formations de mise en prise correspondantes sont agencées sur chacune des première et deuxième parties.

56. Moule selon l'une quelconque des revendications 28 à 55, **caractérisé en ce que** des canaux (64, 94) sont agencés dans la surface supérieure de la deuxième partie (66, 92), laquelle surface vient en contact contre la troisième partie, les canaux (64, 94) étant tels qu'ils permettent à des fluides de refroidissement et/ou éléments chauffants d'être contenus dans ceux-ci.

57. Moule selon la revendication 56, **caractérisé en ce que** les canaux (64, 94) ont une largeur et une profondeur comprises entre 2 et 10 mm.

58. Moule selon la revendication 56 ou 57, **caractérisé en ce que** les canaux (64, 94) sont revêtus de tuyaux (68, 96).

59. Moule selon la revendication 58, **caractérisé en ce que** les tuyaux (68, 96) sont fabriqués en nickel.

60. Moule selon la revendication 58, **caractérisé en ce que** les tuyaux (68, 96) sont réalisés en cuivre ou en acier inoxydable.

61. Moule selon la revendication 60, caractérisé en ce les tuyaux (68, 96) sont munis d'un revêtement en nickel sur l'extérieur de ceux-ci.
